(19) Europäisches Patentamt / European Patent Office / Office européen des brevets

(11) **EP 4 209 258 A1**

(12) **EUROPEAN PATENT APPLICATION**
published in accordance with Art. 153(4) EPC

(43) Date of publication:
**12.07.2023 Bulletin 2023/28**

(21) Application number: **21877680.5**

(22) Date of filing: **06.10.2021**

(51) International Patent Classification (IPC):
*B01D 39/16* (2006.01)          *D01F 6/76* (2006.01)
*D04H 3/009* (2012.01)          *D04H 3/16* (2006.01)
*D01D 5/08* (2006.01)

(52) Cooperative Patent Classification (CPC):
**B01D 39/16; D01D 5/08; D01F 6/76; D04H 3/009; D04H 3/16**

(86) International application number:
**PCT/JP2021/037058**

(87) International publication number:
**WO 2022/075381 (14.04.2022 Gazette 2022/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.10.2020 JP 2020170104**

(71) Applicant: **Mitsui Chemicals, Inc.**
**Tokyo 105-7122 (JP)**

(72) Inventor: **IIBA, Kozo**
**Chuo-ku**
**Tokyo 104-0028 (JP)**

(74) Representative: **Hoffmann Eitle**
**Patent- und Rechtsanwälte PartmbB**
**Arabellastraße 30**
**81925 München (DE)**

(54) **FIBER NONWOVEN FABRIC, FILTER, AND METHOD FOR MANUFACTURING FIBER NONWOVEN FABRIC**

(57)    A fiber nonwoven fabric includes a fiber containing an aromatic polyether ketone, and a coefficient of variation in a fiber diameter of the fiber is 100% or less.

FIG. 1

**Description**

Technical Field

The present invention relates to a fiber nonwoven fabric, a filter and a method of manufacturing a fiber nonwoven fabric.

Background Art

An aromatic polyether ketone has a high melting point and is excellent in heat resistance, and therefore it may be used as a nonwoven fabric for a filter material, a battery separator or the like.

For example, a heat-resistant meltblown nonwoven fabric consisting of a polyether ether ketone resin has been proposed, which is characterized in that the meltblown nonwoven fabric has physical properties that an average fiber diameter is from 1 to 20 $\mu$m, a basis weight is from 5 to 120 g/cm$^2$, an air permeability is 1 to 400 cc/cm$^2$/sec, a thickness is from 0.05 to 1.0 mm, a tensile strength is from 2 to 50 N/25 mm, and a tensile elongation is from 1 to 100% (for example, see Patent Document 1).

Further, a heat-resistant nonwoven fabric characterized by consisting of long fibers of an aromatic polyether ketone, and preferably a heat-resistant nonwoven fabric that has a fiber diameter of the long fibers of from 3 to 50 $\mu$m and a crystallinity of from 20 to 60% and that is characterized in that the nonwoven fabric is integrated by thermocompression bonding with a compression area ratio of 3% or more, have been proposed (for example, see Patent Document 2).

[Patent Document 1] Japanese Patent Application Laid-Open (JP-A) No.2008-81893
[Patent Document 2] JP-A No.2010-106388

SUMMARY OF INVENTION

Technical Problem

It has been found that the nonwoven fabrics consisted of a polyether ether ketone resin described in Patent Documents 1 and 2 are sometimes inferior in performance when used as a filter. Filter performance is expressed as, for example, a quality factor (Q value). The Q value is a value obtained from pressure loss and particle collection efficiency.

When a nonwoven fabric is used as a filter, it is preferable not only to have a high Q value at room temperature, but also to maintain filter performance over a wide temperature range. Therefore, it is preferable that the Q value fluctuates little even when the temperature changes, for example, it is desirable that a decrease in the Q value is prevented even after the filter is exposed to a high temperature. However, in a case in which a nonwoven fabric constituted of a thermoplastic resin is used as a filter, it is likely that the thermoplastic resin constituting the nonwoven fabric dissolves when the filter is exposed to a high temperature, or the Q value after the heat treatment is significantly lower than the Q value before the heat treatment. As a result, problems such as deterioration of filter performance when the temperature changes are likely to occur.

The present disclosure has been made in view of the above, the object is to provide a fiver nonwoven fabric having a high Q value at room temperature and capable of preventing a decrease in Q value due to heat treatment, a filter including the fiber nonwoven fabric, and a method of manufacturing the fiber nonwoven fabric.

Solution to Problem

The specific means to solve the above problems include the following aspects.

<1> A fiber nonwoven fabric comprising:

a fiber containing an aromatic polyether ketone,
wherein a coefficient of variation in a fiber diameter of the fiber is 100% or less.

<2> The fiber nonwoven fabric according to <1>, wherein a viscosity of the fiber at 400°C is from 50 Pa•s to 500 Pa•s.
<3> The fiber nonwoven fabric according to <1> or <2>, wherein an average fiber diameter of the fiber is 10 $\mu$m or less.
<4> The fiber nonwoven fabric according to any one of <1> to <3>, wherein the aromatic polyether ketone includes a polyether ether ketone.
<5> The fiber nonwoven fabric according to any one of <1> to <4>, wherein the fiber nonwoven fabric includes a meltblown nonwoven fabric.

<6> A filter comprising the fiber nonwoven fabric according to any one of <1> to <5>.

<7> A method of manufacturing a fiber nonwoven fabric comprising:

a step of discharging a molten resin or a molten resin composition that contains an aromatic polyether ketone from a spinneret together with a heating gas, and drawing the resin or the resin composition with the heating gas to form a fibrous material, by a meltblown method,

wherein a flow rate of the heating gas is set to from 150 Nm$^3$/hour/m to 1,000 Nm$^3$/hour/m, and

wherein the heating gas is discharged so as to satisfy the following formulas (1) and (2) when a temperature of the heating gas is Ta (°C), a temperature of the molten resin or the molten resin composition is Tp (°C), a crystallization temperature of the aromatic polyether ketone is Tc (°C), and a melting point of the aromatic polyether ketone is Tm (°C):

$$\text{formula (1)} \quad Tc < Ta \leq Tm + 200$$

$$\text{formula (2)} \quad 40 \leq Tp - Ta \leq 190.$$

<8> The method of manufacturing a fiber nonwoven fabric according to <7>, wherein a viscosity of the resin or the resin composition at 400°C is from 50 Pa•s to 500 Pa•s.

<9> The method of manufacturing a fiber nonwoven fabric according to <7> or <8>, wherein the heating gas is discharged so as to satisfy the following formula (1)':

$$\text{formula (1)'} \quad Tm - 30 \leq Ta \leq Tm + 200.$$

<10> The method of manufacturing a fiber nonwoven fabric according to any one of <7> to <9>, wherein the flow rate of the heating gas is set to from 250 Nm$^3$/hour/m to 850 Nm$^3$/hour/m.

<11> A method of manufacturing a fiber nonwoven fabric comprising:
a step of discharging a molten resin or a molten resin composition that contains an aromatic polyether ketone from a spinneret together with a heating gas, and drawing the resin or the resin composition with the heating gas in addition to cooling the resin or the resin composition with a cooling gas supplied from both sides of a machine direction to form a fibrous material, by a meltblown method.

$$\text{formula (3)} \quad 300°C \leq Tp - Tq \leq 550°C.$$

<12> The method of manufacturing a fiber nonwoven fabric according to <11>, wherein a flow rate of the cooling gas is set to from 1,000 Nm$^3$/hour/m to 20,000 Nm$^3$/hour/m.

<13> The method of manufacturing a fiber nonwoven fabric according to <11> or <12>, wherein a temperature of the cooling gas is 30°C or less.

<14> The method of manufacturing a fiber nonwoven fabric according to any one of <11> to <13>, wherein the heating gas is discharged, and the cooling gas is supplied, so as to satisfy the following formula (3) when a temperature of the molten resin or the molten resin composition is Tp (°C), and a temperature of the cooling gas is Tq (°C):

$$\text{formula (3)} \quad 350°C \leq Tp - Tq \leq 550°C.$$

<15> The method of manufacturing a fiber nonwoven fabric according to any one of <7> to <14>, wherein the aromatic polyether ketone includes a polyether ether ketone.

<16> The method of manufacturing a fiber nonwoven fabric according to any one of <11> to <15>, wherein the resin or the resin composition that contains the aromatic polyether ketone is molten using a twin screw extruder.

Advantageous Effects of Invention

According to the present disclosure, a fiver nonwoven fabric having a high Q value at room temperature and capable of preventing a decrease in Q value due to heat treatment, a filter including the fiber nonwoven fabric, and a method of manufacturing the fiber nonwoven fabric can be provided.

BRIEF DESCRIPTION OF DRAWINGS

FIG. 1 is a schematic diagram showing an example of the configuration of a fiber nonwoven fabric manufacturing apparatus used in a manufacturing method 1 of a fiber nonwoven fabric of the present disclosure.
FIG. 2 is a schematic diagram showing an example of the configuration of a fiber nonwoven fabric manufacturing apparatus used in a manufacturing method 2 of a fiber nonwoven fabric of the present disclosure.

DESCRIPTION OF EMBODIMENTS

In the present disclosure, the numerical range represented by "A to B" includes A and B as a minimum value and a maximum value, respectively.
In the present disclosure, when numerical ranges are described in a stepwise manner, the upper limit value or the lower limit value of a numerical range may be replaced with the upper limit value or the lower limit value of other numerical range. In a numerical range described in the present disclosure, the upper limit or the lower limit of the numerical range may be replaced with a relevant value indicated in any of Examples.
In the present disclosure, the "process" refers not only to a process that is independent from the other processes, but also to a process that cannot be clearly distinguished from the other processes as long as the aim of the process is achieved.
In the present disclosure, when there are more than one kind of substances corresponding to a component of a composition, a content amount of each component in the composition refers to a total amount of the plural substances present in the composition, unless otherwise stated.
In the present disclosure, a Q value of the fiber nonwoven fabric is a value calculated by the following formula (a) using collection efficiency and pressure loss. As shown in the following formula, it can be seen that the lower the pressure loss and the higher the collection performance, the higher the Q value, and the filtering performance is good when the fiber nonwoven fabric is used for a filter.

$$\text{Q value (Pa}^{-1}) = - [\ln (1 - [\text{collection efficiency}])/(\text{pressure loss (Pa))}] \quad (a)$$

In the present disclosure, the collection efficiency and the pressure loss can be measured by the methods described in the following Examples.
The collection efficiency $Y(d_f)$(-) at the average fiber diameter $d\varepsilon$ of fibers constituting a fiber nonwoven fabric is expressed by the following formula (b) as described in Russell, Stephen J. Handbook of nonwovens. Woodhead Publishing, P488, 2006.. In the following formula (b), $Y(d_f)$ is the collection efficiency at the average fiber diameter $d\varepsilon$, $d\varepsilon$ is the average fiber diameter (m), $\Phi$ is the volume fraction (-) occupied by the fiber nonwoven fabric, h is the thickness (m) of the fiber nonwoven fabric, E is the collection capacity (-) per standard unit area to the flow perpendicular to the fiber nonwoven fabric, and $e_f$ is the effective fiber length factor (-).

$$Y(d_f) = 1 - exp\left(\frac{-4\phi h}{\pi(1-\phi)d_f}\frac{E}{e_f}\right) \quad (b)$$

The pressure loss $\Delta P_0$ (Pa) at the average fiber diameter $d\varepsilon$ of fibers constituting a fiber nonwoven fabric is expressed by the following formula (c) as described in Russell, Stephen J. Handbook of nonwovens. Woodhead Publishing, P488, 2006.. In the following formula (c), $\Delta P_0$ is the pressure loss (Pa) at the average fiber diameter $d\varepsilon$, $d\varepsilon$ is the average fiber diameter (m), $\Phi$ is the volume fraction (-) occupied by the fiber nonwoven fabric, and h is the thickness (m) of the fiber nonwoven fabric, $\eta$ is the fluid viscosity (Pa s), and $U_0$ is the fluid velocity (m/s).

$$\Delta P_0 = \frac{U_0 \eta h}{d_f{}^2}\left(64\phi^{1.5} + (1 + 56\phi^3)\right) \quad (\text{c})$$

In the present disclosure, "excellent Q value when comparing a certain fiber nonwoven fabric with another fiber nonwoven fabric" means that the Q value is high when the average fiber diameter is converted to the same value, and for example, the average fiber diameter is converted to 5 $\mu$m.

$E/e_f$ can be calculated by substituting the measured value of the collection efficiency, the measured value of the average fiber diameter, the volume fraction occupied by the fiber nonwoven fabric, and the thickness of the fiber nonwoven fabric into the formula (b). Next, the collection efficiency when the average fiber diameter is converted to 5 $\mu$m can be obtained by substituting the volume fraction occupied by the fiber nonwoven fabric, the thickness of the fiber nonwoven fabric, and the calculated $E/e_f$ into the formula (b), and substituting a value of $5\times10^{-6}$ m (5 $\mu$m) as the average fiber diameter $d_\varepsilon$ into the formula (b).

$U_0\eta$ can be calculated by substituting the measured value of the pressure loss, the measured value of the average fiber diameter, the volume fraction occupied by the fiber nonwoven fabric, and the thickness of the fiber nonwoven fabric into the formula (c). Next, the pressure loss when the average fiber diameter is converted to 5 $\mu$m can be obtained by substituting the volume fraction occupied by the fiber nonwoven fabric, the thickness of the fiber nonwoven fabric, and the calculated $U_0\eta$ into the formula (c), and substituting a value of $5\times10^{-6}$ m (5 $\mu$m) as the average fiber diameter $d_\varepsilon$ into the formula (c).

The Q value when the average fiber diameter is converted to 5 $\mu$m can be obtained by substituting the collection efficiency when the average fiber diameter is converted to 5 $\mu$m and the pressure loss when the average fiber diameter is converted to 5 $\mu$m into the formula (a).

[Fiber Nonwoven Fabric]

In the present disclosure of the fiber nonwoven fabric includes a fiber containing an aromatic polyether ketone, and a coefficient of variation in a fiber diameter of the fiber is 100% or less. As a result, the fiber nonwoven fabric of the present disclosure reduces the variation in the fiber diameter, and therefore a filter formed using the fiber nonwoven fabric is excellent in collection efficiency. More specifically, the filter formed using the fiber nonwoven fabric of the present disclosure not only has a high Q value at room temperature, but also maintains filter performance over a wide temperature range. Furthermore, even after the filter is exposed to a high temperature such as about 250° C, the Q value is prevented from being lowered. In addition, in the filter formed using the fiber nonwoven fabric of the present disclosure, the difference between the Q value at room temperature and the Q value at room temperature after exposure to high temperature is small, and fluctuation in the Q value is prevented over a wide temperature range, and the fiber nonwoven fabric of the present disclosure tends to be excellent in performance retention.

In the fiber nonwoven fabric of the present disclosure, from the viewpoint of preventing a defect in spinning and making the average fiber diameter smaller, the viscosity of the fiber at 400°C is preferably from 50 Pa•s to 500 Pa•s, more preferably from 60 Pa•s to 250 Pa•s, and still more preferably from 70 Pa•s to 95 Pa•s.

The method of measuring the viscosity in the present disclosure is as described in the following Examples.

The average fiber diameter of the fiber constituting the fiber nonwoven fabric of the present disclosure is preferably 10 $\mu$m or less form the viewpoint that a filter formed by the fiber nonwoven fabric suitably traps a smaller particle, and more preferably from 0.1 $\mu$m to 10 $\mu$m, still more preferably from 0.3 $\mu$m to 8.0 $\mu$m, and particularly preferably from 0.5 $\mu$m to 5 $\mu$m, from the viewpoint of the strength and collection efficiency of the fiber nonwoven fabric.

The average fiber diameter of the fiber constituting the fiber nonwoven fabric can be measured as shown below. An electron microscopic photo (magnification 1000 times) of the fiber nonwoven fabric is imaged, the diameter of the fiber that can measure the diameter of the fiber is measured from the obtained photo, and images and measurements are repeated until the total number of measured fibers exceeds 100. The average value of the thus obtained fiber diameters is regarded as the aforementioned average fiber diameter.

The coefficient of variation (CV value) in the fiber diameter of the fiber constituting the fiber nonwoven fabric of the present disclosure is 100% or less, from the viewpoint of the collection efficiency in the fiber nonwoven fabric, preferably 90% or less, and more preferably 85% or less. The CV value is not particularly limited as long as it is 0% or more, and for example, may be 30% or more, or may be 50% or more. The CV value can be calculated by multiplying 100 by a value in which the standard deviation (DP) of the above average fiber diameter is divided by the average fiber diameter (Da) (see the following formula).

$$\text{CV value} = [\text{Standard deviation (Dp)/average fiber diameter (Da)}] \times 100$$

The average pore size of the pores of the fiber nonwoven fabric measured at the basis weight of 10 g/m² is preferably from 0.01 μm to 10.0 μm, and more preferably from 0.1 μm to 3.0 μm. When the average pore size is 0.01 μm or more, the pressure loss does not become too high and the decrease in the flow rate can be easily prevented in a case in which the fiber nonwoven fabric is used for a filter. When the average pore size is 10.0 μm or less, the collection efficiency tends to be further improved in a case in which the fiber nonwoven fabric is used for the filter. The average pore size of fiber nonwoven fabric can be measured by a bubble point method. Specifically, a test piece made of the fiber nonwoven fabric may be impregnated with a fluorinebased inert liquid, and the pore size may be measured with a capillary flow porometer.

The basis weight of the fiber nonwoven fabric may be appropriately determined depending on the application, and, for example, is preferably from 1 g/m² to 200 g/m², and more preferably from 5 g/m² to 100 g/m². When the basis weight is 1 g/m² or more, the fiber nonwoven fabric tends to be easily manufactured by improving the strength of the fiber nonwoven fabric. When the basis weight is 200 g/m² or less, there is a tendency that the pressure loss does not become too high, and the fiber nonwoven fabric can be suitably used as a filter.

The method of measuring the basis weight of the fiber nonwoven fabric in the present disclosure is as described in the following Examples.

The thickness of the fiber nonwoven fabric may be appropriately determined depending on the application, and, for example, preferably from 0.01 mm to 1.00 mm, and more preferably from 0.05 mm to 0.60 mm. When the thickness is 0.01 mm or more, there is a tendency that the balance between the dust collection efficiency and pressure loss is suitably ensured when the fiber nonwoven fabric is used as a filter, and the Q value of the filter is further improved, which is preferable. When the thickness is 1.00 mm or less, there is a tendency that the thickness of the film can be reduced, which is preferable. According to the fiber nonwoven fabric of the present disclosure, the collection efficiency is improved by preventing the variation in the fiber diameter, and therefore the Q value tends to be excellent even if the thickness is reduced compared to the conventional fiber nonwoven fabric.

The method of measuring the thickness of the fiber nonwoven fabric in the present disclosure is as described in the following Examples.

The air permeability of the fiber nonwoven fabric may be appropriately determined depending on the application, and, for example, preferably from 0.1 cm³/cm²/sec to 200 cm³/cm²/sec, and more preferably from 1.0 cm³/cm²/sec to 150 cm³/cm²/sec. When the air permeability is 0.1 cm³/cm²/sec or more, the pressure loss tends to be reduced, and when the air permeability is 200 cm³/cm²/sec or less, the collection efficiency tends to be improved.

The method of measuring the air permeability of the fiber nonwoven fabric in the present disclosure is as described in the following Examples.

The fiber nonwoven fabric of the present disclosure is not particularly limited as long as it includes at least one type of a nonwoven fabric. Examples of the nonwoven fabric included in the fiber nonwoven fabric of the present disclosure include various known short fiber nonwoven fabrics and long fiber nonwoven fabrics (for example, long-fiber cellulose nonwoven fabric) such as a meltblown nonwoven fabric, a spunbond nonwoven fabric, a wet nonwoven fabric, a spunlace nonwoven fabric, a dry nonwoven fabric, a dry pulp nonwoven fabric, an airlaid nonwoven fabric, a water jet nonwoven fabric, a flash spun nonwoven fabric, an open nonwoven fabric, and a needle punch nonwoven fabric. Among them, the fiber nonwoven fabric of the present disclosure preferably includes a meltblown nonwoven fabric.

The fiber nonwoven fabric of the present disclosure may be composed of one type of nonwoven fabric, or may be composed of two or more types of nonwoven fabrics.

The fiber nonwoven fabric of the present disclosure may be used as a single-layer nonwoven fabric, or may be used as a nonwoven fabric constituting at least one layer of a layered body. Examples of other layers constituting the layered nonwoven fabric include, in addition to the fiber nonwoven fabric of the present disclosure, other nonwoven fabrics such as a conventional meltblown nonwoven fabric, a spunbond nonwoven fabric, a needle punched nonwoven fabric, and a spunlace nonwoven fabric, a woven fabric, a knitted fabric, and paper.

The fiber nonwoven fabric of the present disclosure can be used in a wide variety of applications in which fiber nonwoven fabrics are commonly used. Examples of applications of the fiber nonwoven fabric include a filter, a sanitary material, a medical material, a packaging material, a battery separator, a heat retaining material, a heat insulating material, protective clothing, a clothing material, an electronic material, and a sound absorbing material.

The fiber nonwoven fabric of the present disclosure may be preferably used as, for example, a filter such as a gas filter (air filter) and a liquid filter. Since the fiber nonwoven fabric of the present disclosure has little variation in the aforementioned CV value, that is, little variation in the fiber diameter, relatively large holes (defective sites) are less likely to be formed between the fibers. Accordingly, the fiber nonwoven fabric of the present disclosure is suitably used for a high-performance filter with excellent filtering performance.

The fiber nonwoven fabric of the present disclosure may be electrically charged. The charged fiber nonwoven fabric is suitably used for an air filter. The charged fiber nonwoven fabric can be obtained by subjecting the fiber nonwoven fabric before charging to charging processing as described later.

The fiber included in the fiber nonwoven fabric of the present disclosure contains an aromatic polyether ketone. The aromatic polyether ketone is not particularly limited as long as it is a polymer having a plurality of structures each having an aromatic ring such as a benzene ring, an ether bond, and an aromatic ring such as a benzene ring in this order, a ketone bond and an aromatic ring such as a benzene ring in this order. Further, the aromatic polyether ketone may have a skeleton other than the aromatic ring, an ether bond or a ketone bond, for examples, may have an ester bond.

The specific examples of the aromatic polyether ketone include a polyether ketone, a polyether ketone ketone, a polyether ether ketone ketone, and a polyether ketone ester, and from the viewpoint of heat resistance, the polyether ether ketone is preferable.

The aforementioned fiber may contain one type of the aromatic polyether ketone, or may contain two or more types of the aromatic polyether ketones.

The aforementioned resin may contain only aromatic polyether ketone as the resin, or may contain the aromatic polyether ketone and another resin. Examples of another resin include a thermoplastic resin.

From the viewpoint of heat resistance, a content rate of the aromatic polyether ketone in the resin contained in the aforementioned fiber is preferably 50% by mass or more, more preferably 90% by mass or more, and still more preferably 99% by mass or more, with respect to the total amount of the resin.

The upper limit of the content rate of the aromatic polyether ketone in the resin contained in the aforementioned fiber is not particularly limited.

The thermoplastic resin that may be contained in the aforementioned resin is not particularly limited and examples thereof include α-olefin homopolymers or copolymers such as ethylene, propylene, 1-butene, 1-pentene, 1-hexene, 1-octene, 3-methyl-1-butene, 3-methyl-1-pentene, 3-ethyl-1-pentene, 4-methyl-1-pentene, and 4-methyl-1-hexene; polyesters such as polyethylene terephthalate, polybutylene terephthalate and polyethylene naphthalate; polyamides such as nylon-6, nylon-66, and polymetaxylene adipate; polyvinyl chloride, polyimide, ethylenevinyl acetate copolymers, polyacrylonitrile, polycarbonate, polystyrene, and ionomers. The thermoplastic resin may consist of one type, or may be a mixture of two or more types.

Examples of the α-olefin homopolymers or copolymers include ethylene-based polymers such as ethylene/propylene random copolymers, high-pressure low-density polyethylene, linear low-density polyethylene (LLDPE), high-density polyethylene, and ethylene random copolymers such as ethylene/1-butene random copolymers; propylene-based polymers such as polypropylene (propylene homopolymers), propylene random copolymer such as propylene/ethylene random copolymers, and propylene/1-butene random copolymer; poly-1-butene, and poly-4-methyl-1-pentene.

The fiber contained in the fiber nonwoven fabric of the present disclosure may contain an additive commonly used, if necessary. Examples of the additives include various known additives such as antioxidants, weather stabilizers, heat stabilizers, light stabilizers, antistatic agents, antifog agents, lubricants, dyes, pigments, natural oils, synthetic oils, and waxes.

From the viewpoint of heat resistance, a content rate of the aromatic polyether ketone in the aforementioned fiber is preferably 50% by mass or more, more preferably 90% by mass or more, and still more preferably 99% by mass or more, with respect to the total amount of the fiber.

The upper limit of the content rate of the aromatic polyether ketone in the aforementioned fiber is not particularly limited.

Hereinafter, the manufacturing method 1 of a fiber nonwoven fabric and the manufacturing method 2 of a fiber nonwoven fabric will be explained as examples of manufacturing the fiber nonwoven fabric of the present disclosure. The methods of manufacturing the fiber nonwoven fabric of the present disclosure is not limited to these manufacturing methods.

[Manufacturing Method 1 of Fiber Nonwoven Fabric]

The manufacturing method 1 of a fiber nonwoven fabric of the present disclosure is a method that includes a step of discharging a molten resin or a molten resin composition that contains an aromatic polyether ketone from a spinneret together with a heating gas, and drawing the resin or the resin composition with the heating gas to form a fibrous material, by a meltblown method, and in which a flow rate of the heating gas is set to from 150 Nm$^3$/hour/m to 1,000 Nm$^3$/hour/m, and the heating gas is discharged so as to satisfy the following formulas (1) and (2) when a temperature of the heating gas is Ta (°C), a temperature of the molten resin or the molten resin composition is Tp (°C), a crystallization temperature of the aromatic polyether ketone is Tc (°C), and a melting point of the aromatic polyether ketone is Tm (°C):

$$\text{formula (1)} \quad Tc < Ta \leq Tm + 200$$

## formula (2) $40 \leq Tp-Ta \leq 190$.

Conventionally, for example, as described in Republished Patent No. 2012/102398, the temperature of the heating gas (Ta) is the same as the temperature of the molten resin or resin composition (spinneret temperature) (Tp) or higher is common. On the other hand, the present inventor found that it is possible to produce the aforementioned fiber nonwoven fabric with a small variation in the fiber diameter by setting the temperature of the heating gas (Ta) lower than the temperature of the molten resin or resin composition (Tp) by a certain amount or more, and controlling the flow rate of the heating gas within a predetermined range.

The reason for this is not clear, but is presumed as follows. That is, when Tp-Ta ($\Delta T$) is 40°C or higher, the resin or resin composition discharged from the spinneret is moderately rapidly cooled, so that it is moderately easy to solidify. This makes it less likely for the resin or resin composition discharged in fibrous form to fuse with each other, so that the variation in the fiber diameter can be reduced. On the other hand, when $\Delta T$ is 190°C or less and the temperature of the heating gas (Ta) satisfies the range of formula (1), the resin or resin composition discharged from the spinneret is not cooled too quickly. Therefore, the stretching (pulling) effect by the heating gas is less likely to be lost. As a result, insufficient drawing by the heating gas can be prevented, and therefore an increase in the fiber diameter can also be prevented.

Furthermore, by controlling the flow rate of the heating gas, it is possible to generate the stretching effect sufficiently to prevent an increase in the fiber diameter, and it is also possible to prevent the variation in the fiber diameter due to fusing of adjacent fibrous resins or resin compositions immediately after ejection. According to the manufacturing method 1 of a fiber nonwoven fabric of the present disclosure, the Q value at room temperature when forming a filter, and it is possible to manufacture a fiber nonwoven fabric capable of preventing a decrease in the Q value due to heat treatment. Furthermore, in the filter which is formed using a fiber nonwoven fabric manufactured by the manufacturing method 1 of a fiber nonwoven fabric of the present disclosure, there is a tendency that the difference between the Q value at room temperature and the Q value at room temperature after exposing it at high temperature is small, the variation in the Q value is prevented over a wide temperature range, and the fiber nonwoven fabric is excellent in performance retention.

In the manufacturing method 1 of a fiber nonwoven fabric of the present disclosure, in order to obtain a fiber nonwoven fabric with a small variation in the fiber diameter, it is not necessary to blow cooling gas for quenching the resin or resin composition discharged from the spinneret, and for example it is not necessary to perform a step of blowing cooling gas with 30°C or less against the resin or resin composition discharged from the spinneret. In other words, it is not necessary to blow the gas in multiple steps, and it can be done in one step. Furthermore, it is not necessary that, in order to reduce the variation in the fiber diameter, a suction hood is arranged along the outer peripheral surface of the suction roll, suction belt, or the like, or the airflow is controlled by the suction hood, which is as described in Republished Patent No. 2012/102398. Therefore, the manufacturing method 1 of a fiber nonwoven fabric of the present disclosure can be realized with a relatively simple device configuration.

The manufacturing method 1 of the present disclosure includes the step of discharging a molten resin or a molten resin composition that contains the aromatic polyether ketone from the spinneret together with the heating gas, and drawing the resin or the resin composition with the heating gas to form a fibrous material, by a meltblown method.

The meltblown method is a method in which, when a molten resin or resin composition is discharged from a spinneret in a fibrous form, a heating gas is applied from both sides of the molten discharge (discharged resin or resin composition), and the heating gas is accompanied by the discharge to reduce the diameter of the discharge. Specifically, for example, a resin containing an aromatic polyether ketone or a resin composition containing an aromatic polyether ketone and at least one of other resins or additives as raw materials is molten using an extruder or the like. The molten resin or resin composition is introduced into a spinneret connected to the tip of an extruder, and discharged in the form of fiber from a spinning nozzle of the spinneret. The resin or resin composition discharged in fibrous form is exposed to the heating gas ejected from a gas nozzle of the spinneret, the resin or resin composition is stretched by the heating gas, and thereby the resin or resin composition is thinned.

The preferable condition of the content rate of the aromatic polyether ketone contained in the aforementioned resin is the same as the content rate of the aromatic polyether ketone contained in the aforementioned fiber.

The preferable condition of the lower limit of the content rate of the aromatic polyether ketone contained in the aforementioned resin composition is the same as the content rate of the aromatic polyether ketone contained in the aforementioned fiber. The upper limit of the content rate of the aromatic polyether ketone contained in the aforementioned resin composition is not particularly limited as long as it is less than 100% by mass.

The aromatic polyether ketone contained in the resin or the resin composition preferably includes a polyether ether ketone from the viewpoint of heat resistance.

The viscosity of the resin or the resin composition at 400°C is preferably from 50 Pa•s to 500 Pa•s, more preferably from 70 Pa•s to 260 Pa•s, and still more preferably from 80 Pa•s to 105 Pa•s from the viewpoint of being excellent in spinning stability of the resin or the resin composition, or from the viewpoint of easily obtaining the fiber with a small average fiber diameter by making it easier to spin.

The resin and resin composition which are measuring object on viscosity refer to the resin and resin composition before melting.

As described above, from the viewpoint of reducing the diameter of the fiber constituting the fiber nonwoven fabric and reducing the variation in the fiber diameter (narrowing the fiber diameter distribution), the heating gas is blown so as to satisfy the following formulas (1) and (2):

$$\text{formula (1)} \quad Tc < Ta \leq Tm + 200$$

$$\text{formula (2)} \quad 40 \leq Tp - Ta \leq 190.$$

As shown in the formula (1), when the temperature of the heating gas (Ta) is higher than the crystallization temperature (Tc), it is possible to prevent an extension defect due to solidification of the discharged resin or resin composition and it is possible to an increase in the fiber diameter. When the temperature of the heating gas (Ta) is Tm+200°C or less, it is possible not only to easily adjust ΔT (Tp-Ta) to the above range, but also to prevent a thread breakage due to a decrease in melt viscosity of the discharged resin or resin composition. From the viewpoint of sufficiently drawing the discharged resin or resin composition to make it easier to obtain a fiber with a smaller fiber diameter, it is more preferable that the temperature of the heating gas (Ta) satisfies the following formula (1)':

$$\text{formula (1)'} \quad Tm - 30 \leq Ta \leq Tm + 200.$$

Tp-Ta (ΔT) is preferably from 40°C to 180°C, and more preferably from 80°C to 140°C from the viewpoint of the balance between control of the variation in the fiber diameter and control of an increase in the fiber diameter. ΔT is preferably 40°C or more since the average fiber diameter tends to be smaller.

The temperature of the heating gas (Ta) may be selected according to the type of the aromatic polyether ketone so as to satisfy the aforementioned formula (1), and preferably satisfy the formula (1)'. When the aromatic polyether ketone is a polyether ether ketone, the temperature of the heating gas (Ta) is, for example, preferably from 300°C to 500°C, more preferably from 320°C to 480°C, and still more preferably from 340°C to 440°C.

The temperature of the molten resin or resin composition (Tp) may be selected according to the type of the aromatic polyether ketone so as to satisfy the aforementioned formula (2). When the aromatic polyether ketone is a polyether ether ketone, the temperature of the molten resin composition (Tp) is, for example, preferably from 360°C to 520°C, more preferably from 400°C to 490°C, and still more preferably from 460°C to 490°C.

The temperature of the molten resin or resin composition (Tp) can be measured as the preset temperature of the spinneret (die).

The temperature of the heating gas (Ta) can be measured as the temperature of the heating gas immediately after being discharged from the spinneret (die). Specifically, the temperature of the heating gas (Ta) can be measured as the temperature of the heating gas at an opening of the gas nozzle of the spinneret (die). The temperature of the heating gas (Ta) may be adjusted as follows; for example, the Ta may be adjusted by adjusting the supply temperature of the heating gas so that the temperature of the heating gas (Ta) at the opening of the gas nozzle reaches a predetermined temperature while measuring the temperature of the heating gas (Ta) at the opening of the spinneret (die) gas nozzle; or Ta may be adjusted by preparing, in advance, data (calibration curve) showing the relationship between the temperature of the heating gas (Ta) at the opening of the gas nozzle and the supply temperature of the heating gas under predetermined conditions (e.g. die temperature, heating gas flow rate) and, based on the data, adjusting the supply temperature of the heating gas so that the temperature of the heating gas (Ta) at the opening of the gas nozzle reaches a predetermined temperature.

The crystallization temperature (Tc) and melting point (Tm) of the aromatic polyether ketone can be measured using DSC (differential scanning calorimetry).

Specifically, DSC Pyris1 manufactured by PerkinElmer, Inc. or DSC7020 manufactured by SII NanoTechnology Inc. is used as a differential scanning calorimeter (DSC). Under a nitrogen atmosphere (20 mL/min), a sample (about 5 mg) is raised to the end-point temperature set for each polyether ether ketone (490°C for polyether ether ketone), and held at that temperature for 3 minutes. Then, the sample is cooled to 30°C at 10°C/min, held at 30°C for 1 minute and heat up to the above-mentioned end-point temperature at 10°C/min. The melting point (Tm) is calculated from a peak apex of a crystal melting peak in the temperature rising process, and the crystallization temperature (Tc) is calculated from a peak apex of a crystallization peak in the temperature lowering process. When multiple crystal melting peaks are observed, the peak on the high temperature side is taken as the melting point (Tm).

The discharge quantity of the resin composition per spinning nozzle of the spinneret is usually from 0.01 g/min to 3.0 g/min, and preferably from 0.05 g/min to 2.0 g/min. When the discharge quantity is 0.01 g/min or more, not only is the productivity of the fiber nonwoven fabric less likely to be impaired, but also a fiber breakage can be easily prevented. When the discharge quantity is 3.0 g/min or less, the fiber diameter can be sufficiently reduced.

The flow rate of the heating gas is from 150 $Nm^3$/hour/m to 1,000 $Nm^3$/hour/m from the viewpoint of reducing the fiber diameter of the fiber nonwoven fabric and reducing the variation in the fiber diameter (narrowing the fiber diameter distribution). When the flow rate of the heating gas is 150 $Nm^3$/hour/m or more, it is easy to sufficiently stretch the discharged resin composition, and it is easy to sufficiently reduce the fiber diameter. When the flow rate of the heating gas is 1000 $Nm^3$/hour/m or less, it is easy to increase the variation in the fiber diameter due to air turbulence. From the same point of view, the flow rate of the heating gas is preferably from 250 $Nm^3$/h/m to 850 $Nm^3$/h/m.

The type of the heating gas is not particularly limited, and examples thereof include gases inert to the discharged resin or resin composition, such as air, carbon dioxide gas, and nitrogen gas. Among them, air is preferable from the viewpoint of economical efficiency.

The discharged resin or resin composition is stretched by a heating gas to obtain a fibrous material. From the viewpoint that the filter formed by using the manufactured fiber nonwoven fabric can suitably trap smaller particles, the average fiber diameter of the fibrous material is preferably 10 $\mu$m or less, and from the viewpoint of the strength the fiber nonwoven fabric and collection efficiency, it is more preferably from 0.1 $\mu$m to 10 $\mu$m, still more preferably from 0.3 $\mu$m to 8.0 $\mu$m, and particularly preferably from 0.5 $\mu$m to 5.0 $\mu$m.

The method of measuring the average fiber diameter of the fibrous material is the same as the aforementioned method of measuring the average fiber diameter of the fiber described above.

The manufacturing method 1 of the present disclosure may further include a step of collecting the fibrous material in a web form after the step of forming the aforementioned fibrous material. In the step of collecting, for example, the obtained fibrous material is collected in the web form on a collector. Further, when collecting it on the collector, collection may be promoted by sucking air from the back side of the collector as seen from the fiber.

The specific examples of the collector include a porous belt and a porous drum. The collection of the fibrous material may be promoted by sucking air from the back side of the collector.

The attenuated fiber may be collected on a desired substrate previously disposed on the collector. Examples of pre-disposed substrate include a meltblown nonwoven, a spunbond nonwoven, another nonwoven such as a needle-punched nonwoven fabric or a spunlace nonwoven fabric, a woven fabric, a knitted fabric, and paper. As a result, it is possible to obtain an ultrafine fiber nonwoven fabric layered body used in a high-performance filter, a wiper, or the like.

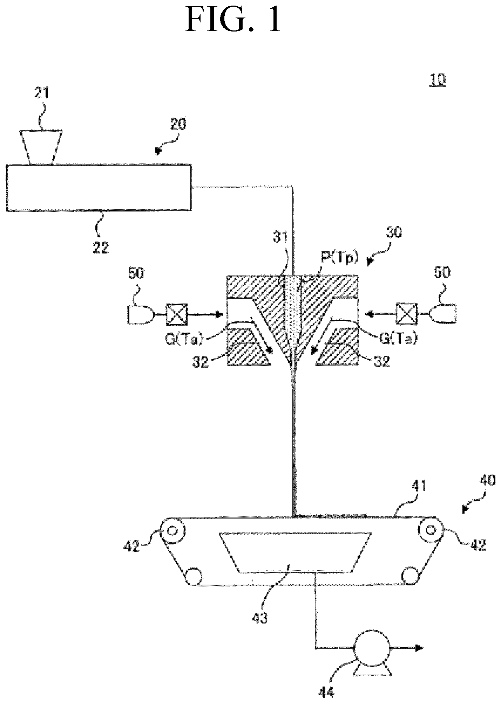

A fiber nonwoven fabric manufacturing apparatus used in the manufacturing method 1 of a fiber nonwoven fabric of the present disclosure will be explained with reference to FIG. 1.

FIG. 1 is a schematic diagram showing an example of the configuration of a fiber nonwoven fabric manufacturing apparatus 10. As shown in FIG. 1, the fiber nonwoven fabric manufacturing apparatus 10 includes an extruder 20, a die (spinneret) 30, and a collection mechanism 40.

The extruder 20 includes a hopper 21 and a compressor 22. Further, the extruder 20 melts a solid resin or resin composition put into the hopper 21 by the compressor 22. The extruder 20 may be a single screw extruder or a multi-screw extruder such as a twin screw extruder. From the viewpoint of improving spinning stability, it is preferable to melt the resin or resin composition using a twin screw extruder.

The die (spinneret) 30 is disposed to be connected to the tip of the extruder 20. The die 30 includes a plurality of spinning nozzles 31 and two gas nozzles 32.

The plurality of spinning nozzles 31 is normally disposed in a row. The spinning nozzle 31 is fed with the molten resin or resin composition conveyed from the extruder 20, and discharges the resin or resin composition in a fibrous form from a nozzle opening. The spinning nozzle diameter may be, for example, from 0.05 mm to 0.80 mm. The temperature of the molten resin or resin composition (Tp) can be adjusted by preset temperature of the die 30.

The distance between small holes in the spinning nozzles of the spinneret is preferably from 0.1 mm to 2.0 mm, and more preferably from 0.15 mm to 1.8 mm. When the distance between small holes is 0.1 mm or more, there is a tendency that the variation in the fiber diameter can be further reduced. When the distance between the small holes is 2.0 mm or less, there is a tendency that the production efficiency can be further improved.

The two gas nozzles (air nozzles) 32 are disposed in the vicinity of the nozzle openings of the spinning nozzles 31, specifically on both sides of a row of the plurality of spinning nozzles 31. The gas nozzle 32 injects a heating gas (heated compressed gas) near the opening of the spinning nozzle 31. As shown in FIG. 1, the gas nozzle 32 injects the heating gas with the resin or resin composition immediately after being discharged from the opening of the spinning nozzle 31.

The heating gas supplied to the gas nozzle 32 is supplied from a gas heating device 50. The temperature of the heating gas (Ta) can be adjusted by heating temperature adjusting means (not shown) attached to the gas heating device 50.

The collecting mechanism 40 includes a porous belt (collector) 41 , rollers 42 and 42 for supporting and conveying the porous belt 41, and an air suction part 43 disposed behind the collecting surface of the porous belt 41. The air suction part 43 is connected with a blower 44. The collection mechanism 40 collects the obtained fibrous material on the moving porous belt 41.

According to such a configuration, the resin or resin composition molten by the extruder 20 is introduced into the spinning nozzle 31 of the die (spinneret) 30 and discharged from the opening of the spinning nozzle 31. On the other hand, the heating gas is injected from the gas nozzle 32 toward the vicinity of the opening of the spinning nozzle 31. The extruded resin or resin composition is stretched and thinned by the heating gas to form a fibrous material.

The temperature of the heating gas (Ta) is set so as to satisfy the aforementioned formulas (1) and (2). Thereby, the molten resin or resin composition is moderately quenched and stretched. Further, the flow rate of the heating gas is adjusted to satisfy the aforementioned range. As a result, even if the molten resin or resin composition is rapidly quenched, it can be stretched sufficiently. Therefore, it is possible to reduce the variation in the fiber diameter while reducing the fiber diameter. The discharged fibrous material is collected on the porous belt 41 to obtain a fiber nonwoven fabric.

[Manufacturing Method 2 of Fiber Nonwoven Fabric]

The manufacturing method 2 of a fiber nonwoven fabric of the present disclosure is a method that includes a step of discharging a molten resin or a molten resin composition that contains an aromatic polyether ketone from a spinneret together with a heating gas, and drawing the resin or the resin composition with the heating gas in addition to cooling the resin or the resin composition with a cooling gas supplied from both sides of a machine direction to form a fibrous material, by a meltblown method.

The manufacturing method 2 of a fiber nonwoven fabric of the present disclosure is different from the aforementioned manufacturing method 1 of a fiber nonwoven fabric of the present disclosure in that the discharge of the heating gas is not limited to the method so as to satisfy the above formulas (1) and (2) and in that, when the resin or resin composition is stretched by the heating gas, the resin or the resin composition is cooled with the cooling gas supplied from both sides of a machine direction. In the manufacturing method 2 of a fiber nonwoven fabric of the present disclosure, by separately blowing the cooling gas that quenches the resin or resin composition discharged from the spinneret, the heating gas and the cooling gas join together to cool the heating gas. Therefore, the fibrous resin or resin composition is cooled immediately after being discharged, and fusion of adjacent fibrous resins or resin compositions can be prevented and as a result, the variation in the fiber diameter can be reduced. Therefore, it is possible to manufacture the aforementioned fiber nonwoven fabric with a small variation in the fiber diameter.

Hereinafter, preferred conditions on the fiber nonwoven fabric manufacturing method 2 of the present disclosure that are different from the aforementioned manufacturing method 1 of a fiber nonwoven fabric of the present disclosure will be explained.

In the manufacturing method 2 of a fiber nonwoven fabric of the present disclosure, the discharge of the heating gas preferably satisfies the above formula (1) from the viewpoint of preventing an increase in the fiber diameter.

In the manufacturing method 2 of a fiber nonwoven fabric of the present disclosure, when the temperature of the heating gas is Ta (°C), and the molten resin or resin composition is Tp (°C), Tp-Ta (ΔT) is not particularly limited. For example, Tp-Ta (ΔT) may be approximately equal, or may be -30≤Tp-Ta≤30.

The temperature of the heating gas (Ta) may be selected according to the type of an aromatic polyether ketone. When the aromatic polyether ketone is a polyether ether ketone, for example, the temperature of the heating gas (Ta) is preferably from 330°C to 550°C, more preferably from 370°C to 520°C, and still more preferably from 430°C to 520°C.

The temperature of the molten resin or resin composition (Tp) may be the same as the preferred range of Tp described in the aforementioned manufacturing method 1 of a fiber nonwoven fabric.

The temperature of the cooling gas is preferably 30°C or less, more preferably from 5°C to 25°C, and still more preferably from 5°C to 20°C, from the viewpoint of suitably preventing the variation in the fiber diameter due to fusing of adjacent fibrous resins or resin composition immediately after discharging.

The flow rate of the cooling gas is preferably from 1,000 Nm$^3$/hour/m to 20,000 Nm$^3$/hour/m, more preferably from 3,000 Nm$^3$/hour/m to 18,000 Nm$^3$/hour/m, and still more preferably from 5,000 Nm$^3$/hour/m to 15,000 Nm$^3$/hour/m.

The type of the cooling gas is not particularly limited, and examples thereof include cooling air.

In the manufacturing method 2 of the fiber nonwoven fabric of the present disclosure, the present inventor have found that it is possible to produce the aforementioned fiber nonwoven fabric with a smaller variation in the fiber diameter, by controlling Tp-Tq (ΔT') within a predetermined range when the temperature of the molten resin or the molten resin composition is Tp (°C) and the temperature of the cooling gas is Tq (°C). For example, the heating gas is discharged and the cooling gas is supplied so as to satisfy the following formula (3):

$$\text{formula (3)} \quad 350°C \leq Tp\text{-}Tq \leq 550°C.$$

The reason why it is possible to manufacture the aforementioned fiber material fabric with a smaller variation in the fiber diameter is not clear, but is presumed as follows. That is, when $\Delta T'$ is 350°C or higher, the resin or resin composition discharged from the spinneret is moderately rapidly cooled, so that it is moderately easy to solidify. This makes it less likely for the resin or resin composition discharged in fibrous form to fuse with each other, so that the variation in the fiber diameter can be reduced. On the other hand, when $\Delta T'$ is 550°C or less, the resin or resin composition discharged from the spinneret is not cooled too quickly. Therefore, the stretching (pulling) effect by the heating gas is less likely to be lost. As a result, insufficient drawing by the heating gas can be prevented, and therefore an increase in the fiber diameter can also be prevented.

$\Delta T'$ is preferably from 370°C to 520°C, and more preferably from 400°C to 500°C, from the viewpoint of manufacturing the aforementioned fiber nonwoven fabric with a further small variation in the fiber diameter.

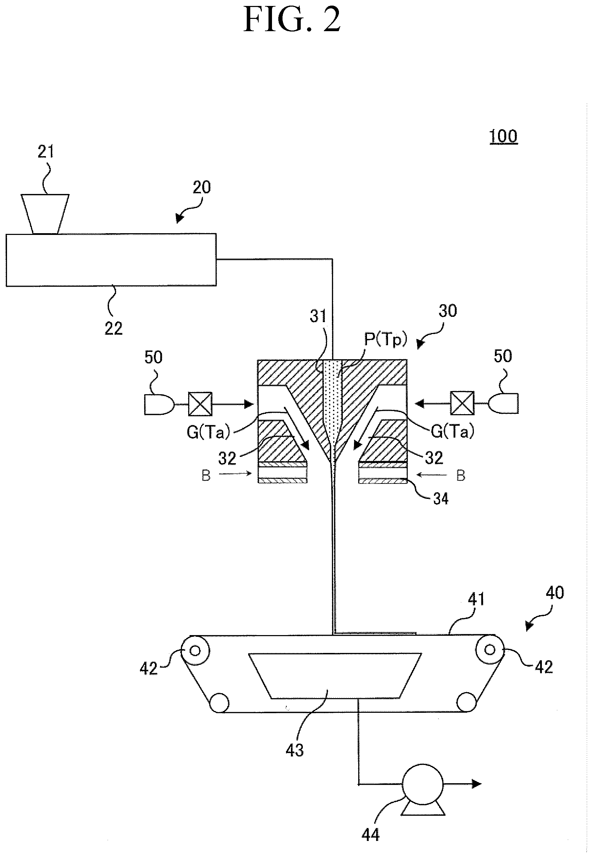

A fiber nonwoven fabric manufacturing apparatus used in the manufacturing method 2 of manufacturing a fiber nonwoven fabric of the present disclosure will be explained with reference to FIG. 2.

FIG. 2 is a schematic diagram showing an example of the configuration of a fiber nonwoven fabric manufacturing apparatus 100. As shown in FIG. 2, the fiber nonwoven fabric manufacturing apparatus 100 differs from the fiber nonwoven fabric manufacturing apparatus 10 shown in FIG. 1 in that attachments 34 for introducing cooling air are attached to the die 30.

The attachment 34 is removable from the die 30. As a result, in the fiber nonwoven fabric manufacturing apparatus 100, the die 30 injects a heating gas (heated compressed gas) from the gas nozzle 32 near the opening of the spinning nozzle 31 while discharging the molten resin or resin composition from the spinning nozzle 31, and the attachments 34 supply a cooling gas in the arrow B direction from the horizontal direction to the molten resin or resin composition and the heating gas that is discharged from the die 30. The resin or resin composition is stretched by the heating gas to obtain a fibrous material. At this time, by separately blowing the cooling gas for quenching the resin or resin composition discharged from the die 30, the heating gas and the cooling gas merge and the heating gas is cooled, so that fusion of the adjacent fibrous resins or resin compositions immediately after discharge can be prevented, and as a result, variation in the fiber diameter can be prevented. According to the manufacturing method 2 of the fiber nonwoven fabric of the present disclosure, it is possible to manufacture a fiber nonwoven fabric having an excellent Q value when used as a filter.

The attachment 34 is attached to the die 30 without a gap in the vertical direction. Therefore, an air passage for taking in outside air is not formed, and the generation of a vortex above the attachment 34 is prevented, and turbulence of the heating gas due to the vortex is less likely to occur. Therefore, it is possible to suitably prevent fusion of adjacent fibrous resins or resin compositions immediately after discharging due to the turbulence. In other embodiments, attachment 34 may have a gap with die 30 in the vertical direction. In this case, it is preferable that the attachment 34 and the die 30 are airtight in the machine direction from the viewpoint of preventing the inflow of air in the machine direction and preventing fusion due to the turbulence.

The die 30 is heated to discharge the heating gas, and the temperature difference between the die 30 and the attachment 34 is large. In order to prevent heat propagation between the attachment 34 and the die 30, for example, it is preferable to interpose a heat insulating material between the lower surface of the die 30 and the upper surface of the attachment 34.

The aforementioned fiber nonwoven fabric of the present disclosure and the fiber nonwoven fabric manufactured by the manufacturing method 1 or the manufacturing method 2 described above may be charged.

The charging processing method is not particularly limited as long as the fiber nonwoven fabric can be electretized, and the methods include a corona charging method, and a method of applying water or an aqueous solution of a water-soluble organic solvent to a fiber nonwoven fabric and then drying it to form an electret (for example, described in JP-A-9-501604, JP-A-2002-115177, etc.). In the case of the corona charging method, an electric field intensity of 15 kV/cm or more is preferable, and an electric field intensity of 20 kV/cm or more is more preferable.

[Filter]

A filter of the present disclosure includes the aforementioned fiber nonwoven fabric of the present disclosure. As a result, the filter of the present disclosure has a reduced variation in the fiber diameter and is excellent in filter accuracy.

EXAMPLES

Hereinafter, the present invention will be specifically described with reference to examples, but the present invention is not limited to the following examples as long as the gist of the present invention is not exceeded.

[Example 1]

A fiber nonwoven fabric was produced using the production apparatus shown in FIG. 1. Specifically, PEEK (polyether ether ketone, Solvey, KetaSpire KT-890P, resin viscosity at 400°C: 99 Pa s) was molten using a twin screw extruder, and the molten PEEK was supplied to a die, and the molten PEEK was discharged from the die of preset temperature: 480°C (temperature Tp of molten PEEK) at a discharge quantity per spinning nozzle of 0.2 g/min and a distance between small holes of 1.0 mm together with heating air (temperature Ta: 350°C, the flow rate: 300 Nm³/h/m) blown from both sides of the spinning nozzle. The diameter of the spinning nozzle in die was 0.4mm. Then, the fibrous PEEK was collected on a collector so as to have a basis weight of 15 g/m² to obtain a fiber nonwoven fabric. For the crystallization temperature (Tc) and melting point (Tm) of PEEK, the values measured by the aforementioned method were used. The crystallization temperature (Tc) of PEEK was 176°C and the melting point (Tm) of PEEK was 347°C.

(Measurement of Resin Viscosity)

The viscosity of the resin used in each example and each comparative example was determined as follows. Specifically, a capillary rheometer (product name: Capilograph 1D PMD-C, manufactured by Toyo Seiki Seisakusho Co., Ltd.) and the resin used in each example and each comparative example were used, shear stress and shear strain rate were measured under the following conditions, and then, the shear viscosity ($\eta$) (Pa·s) was calculated based on the following formula and used as the viscosity of the resin.

[Measurement Condition]

Measuring equipment: Capilograph 1D PMD-C (manufactured by Toyo Seiki Seisakusho Co., Ltd.)
Capillary inner diameter: Φ=0.2 [mm]
Measurement temperature: 400°C
Capillary length/capillary inner diameter (L/D): 10
Piston speed: $2.5 \times 10^2$ (1/sec)
The shear viscosity ($\eta$) (Pa s) is calculated by the following formula from the values of the apparent shear stress and shear strain rate when the above LID is 10.

$$\eta = \frac{\tau}{\dot{\gamma}}$$

In the formula, $\tau$ (Pa) represents the apparent shear stress, and $\gamma$ dot (Pa) (a symbol with a dot (·) above $\gamma$; hereinafter simply referred to as "$\gamma$") represents the shear strain rate.
The apparent shear stress $\tau$ (Pa) is represented by $\tau=pD/\pi 4L$ from piston load p (Pa), capillary inner diameter D (mm), and capillary length L (mm), and the shear stress $\gamma$ (Pa) is represented by $\gamma=32Q/\pi D^3$ using volume flow Q (mm³/s).

[Examples 2 and 3]

Each fiber nonwoven fabric was obtained in the same manner as in Example 1 except that the temperature of the heating air was changed as shown in Table 1.

[Example 4]

A fiber nonwoven fabric was obtained in the same manner as in Example 1 except that the PEEK used in Example 1 was changed to PEEK (polyether ether ketone, Solvey, KetaSpire KT-880P, resin viscosity at 400°C: 220 Pa s). The crystallization temperature (Tc) of PEEK was 177°C and the melting point (Tm) of PEEK was 349°C.

[Example 5]

A fiber nonwoven fabric was produced using the production apparatus shown in FIG. 2. Specifically, the molten PEEK used in example 1 was supplied to a die, and the molten PEEK was discharged from the die of preset temperature: 480°C (temperature Tp of molten PEEK) at a discharge quantity per spinning nozzle of 0.2 g/min together with heating air (temperature Ta: 350°C, flow rate: 300 Nm$^3$/h/m) blown from both sides of the spinning nozzle. The diameter of the spinning nozzle in die was 0.4mm. Furthermore, the temperature Tq of cooling air was 10°C and the flow rate of the cooling air was 12000 Nm$^3$/h/m. Then, the fibrous PEEK was collected on a collector so as to have a basis weight of 15 g/m$^2$ to obtain a fiber nonwoven fabric.

[Example 6]

A fiber nonwoven fabric was obtained in the same manner as in Example 5 except that the temperature of the molten PEEK, the temperature of the heating air, and the temperature of the cooling air were changed as shown in Table 1.

[Comparative Example 1]

A fiber nonwoven fabric was obtained in the same manner as in Example 1 except that a single screw extruder was used instead of the twin screw extruder in Example 1 to melt PEEK, and the temperature of the die and the temperature of the heating air were changed as shown in Table 2.

[Comparative Examples 2, 3, 4]

A fiber nonwoven fabric was obtained in the same manner as in Example 1 except that the temperature of the heating air was changed as shown in Table 2.

[Comparative Example 5]

A fiber nonwoven fabric was obtained in the same manner as in Example 1 except that the PEEK used in Example 1 was changed to PP (polypropylene, ExxonMobil Corporation, Achieve 6936G2, weight average molecular weight: 55,000), and the temperature of the die and the temperature of the heating air were changed as shown in Table 2.

[Comparative Example 6]

A fiber nonwoven fabric was obtained in the same manner as in Example 1 except that the PEEK used in Example 1 was changed to PET (Polyethylene terephthalate, manufactured by Mitsui Chemicals, Inc., Mitsui PET, IV: 0.62), and the temperature of the die and the temperature of the heating air were changed as shown in Table 2.
The physical properties of the obtained fiber nonwoven fabric (average fiber diameter, CV value, basis weight, thickness, and air permeability) were measured by the following methods.

(1) Average fiber diameter ($\mu$m) and coefficient of variation (CV value) of fibers constituting fiber nonwoven fabric

Using an electron microscope (S-3500N manufactured by Hitachi, Ltd.), a photograph of the fiber nonwoven fabric was taken at a magnification of 1000 times. The diameter of the fibers capable of measuring the diameter of the fiber were measured from the obtained photograph, and the imaging and measurement were repeated until the total number of measured fibers exceeded 100, and the arithmetic mean value of the obtained fiber diameters was taken as the average fiber diameter.
In addition, the standard deviation (Dp) of this measurement result was divided by the average fiber diameter (Da) to obtain the coefficient of variation (CV value) of the fiber diameter.

$$\text{CV value} = [\text{standard deviation (Dp)/average fiber diameter (Da)}] \times 100$$

(2) Basis Weight (g/m$^2$)

Three samples of 100 mm in the vertical direction $\times$ 100 mm in the horizontal direction were taken, and the weight of each sample was measured. The average value of the obtained values was converted to per unit area, rounded to the nearest whole number, and determined as the basis weight (g/m$^2$).

(3) Thickness

The thickness of the five points in the center and four corners of the sample whose basis weight was measured was measured with a load of 7 g/m$^2$ using a thickness gauge (PEACOCK, product number "R1-250", measuring terminal 25 mmφ). The thickness was measured by this method for 10 samples for which the basis weight was measured, and the average value was taken as the thickness (mm).

(4) Air permeability (cm$^3$/cm$^2$/sec)

Five samples of 150 mm in the vertical direction × 150 mm in the horizontal direction were collected, and the air permeability was measured under the conditions of the flow rate at a pressure difference of 125 Pa using a Fragile air permeability measuring instrument according to JIS L 1096:2010.

(Measurement of Fiber Viscosity)

The viscosity of the fibers constituting the fiber nonwoven fabric obtained in each example and each comparative example was obtained by the same method as the aforementioned (Measurement of Resin Viscosity).

(Measurement of Collection Efficiency of Unheated Fiber Nonwoven Fabric)

For the fiber nonwoven fabrics obtained in each example and each comparative example, the dust collection efficiency of the unheated fiber nonwoven fabric was measured by the following method. Three samples of 15 cm×15 cm were collected from an arbitrary portion of the fiber nonwoven fabric, and the collection efficiency of each sample was measured using a collection performance measuring device (manufactured by TOKYO DYLEC CORP. Model8130). In measuring the collection efficiency, NaCl particle dust having a number median diameter of 0.3 μm was generated with an atomizer, then the sample was set in a holder, and the air volume was adjusted with the flow rate control valve so that the filter passage speed was 5.3 cm/sec, and the dust concentration was stabilized within the range of 15 mg/m$^3$ to 20 mg/m$^3$.

Upstream dust count D2 upstream of the sample and downstream dust count D1 of the sample were obtained with a laser particle detector, and the numerical value obtained by the following formula was rounded off to the first decimal place to obtain the collection efficiency. In addition, the collection efficiency described in Tables 1 and 2 is an arithmetic average value measured using the three samples.

$$\text{Collection efficiency} = [1 - (D1/D2)]$$

(D1: downstream dust count, D2: upstream dust count)

(Measurement of Pressure Loss (Pa) of Unheated Fiber Nonwoven Fabric)

The pressure loss of the unheated fiber nonwoven fabric was obtained by reading the static pressure difference between the upstream and downstream sides of the sample with a pressure gauge when measuring the collection efficiency. The pressure losses shown in Tables 1 and 2 are arithmetic mean values obtained using three samples.

(Conversion of Collection Efficiency of Unheated Fiber Nonwoven Fabric)

E/e$_f$ was calculated by substituting the measured value of the collection efficiency of the unheated fiber nonwoven fabric, the measured value of the average fiber diameter, the volume fraction occupied by the fiber nonwoven fabric, which is the value obtained by dividing the basis weight of fiber nonwoven fabric by the value obtained by multiplying the density of PEEK by the thickness of fiber nonwoven fabric (basis weight/(density × thickness)), and the thickness of the fiber nonwoven fabric into the formula (b). Next, the collection efficiency (5 μm conversion value) was obtained by substituting the volume fraction occupied by the fiber nonwoven fabric, the thickness of the fiber nonwoven fabric, and the calculated E/e$_f$ into the formula (b), and substituting a value of $5\times10^{-6}$ m (5 μm) as the average fiber diameter dε into the formula (b).

The density of PEEK is 132 kg/m$^3$.

(Conversion of Pressure Loss of Unheated Fiber Nonwoven Fabric)

$U_0\eta$ was calculated by substituting the measured value of the pressure loss, the measured value of the average fiber diameter, the volume fraction occupied by the fiber nonwoven fabric, and the thickness of the fiber nonwoven fabric into the formula (c). Next, the pressure loss (5 $\mu$m conversion value) was obtained by substituting the volume fraction occupied by the fiber nonwoven fabric, the thickness of the fiber nonwoven fabric, and the calculated $U_0\eta$ into the formula (c), and substituting a value of $5\times10^{-6}$ m (5 $\mu$m) as the average fiber diameter $d\varepsilon$ into the formula (c).

(Calculation of Q Value of Unheated Fiber Nonwoven Fabric)

The Q value (5 $\mu$m conversion value) was calculated using formula (a) from the obtained collection efficiency (5 $\mu$m conversion value) and pressure loss (5 $\mu$m conversion value).

(Measurement of Collection Efficiency of Fiber Nonwoven Fabric after Heat Treatment)

The fiber nonwoven fabrics obtained in each example and each comparative example were exposed to high temperature conditions by the following method. Three 15 cm×15 cm samples were taken from an arbitrary portion of the fiber nonwoven fabric, and each sample was fixed with a weight of 100 g at the four corners and placed on a 1 mm thick aluminum flat plate heated to 250°C. After 24 hours, the sample was taken out with the aluminum flat plate, left at room temperature for 6 hours, and returned to room temperature. After that, the collection efficiency after heat treatment was measured in the same manner as the aforementioned (Measurement of Collection Efficiency of Unheated Fiber Nonwoven Fabric).

Furthermore, each physical property after heat treatment was measured, converted, and calculated in the same manner as in the aforementioned (Measurement of Pressure Loss (Pa) of Unheated Fiber Nonwoven Fabric), (Conversion of Collection Efficiency of Unheated Fiber Nonwoven Fabric), (Conversion of Pressure Loss of Unheated Fiber Nonwoven Fabric) and (Calculation of Q Value of Unheated Fiber Nonwoven Fabric).

In addition, the ratio of the Q value of the fiber nonwoven fabric after heat treatment to the Q value of the unheated fiber nonwoven fabric was obtained as the performance retention rate. A higher performance retention rate means that a decrease in the Q value due to heat treatment is prevented.

Tables 1 and 2 show the manufacturing conditions of the fiber nonwoven fabrics of Examples 1 to 6 and Comparative Examples 1 to 6 and the evaluation results of the fiber nonwoven fabrics.

[Table 1]

| | | Symbol | Unit | Example | | | | | |
|---|---|---|---|---|---|---|---|---|---|
| | | | | 1 | 2 | 3 | 4 | 5 | 6 |
| Manufacturing conditions | Resin type | - | | PEEK | PEEK | PEEK | PEEK | PEEK | PEEK |
| | Resin viscosity | - | Pa•s | 99 | 99 | 99 | 220 | 99 | 99 |
| | Extruder | - | - | Twinscrew extruder | Twinscrew extruder | Twinscrew extruder | Twinscrew extruder | Twinscrew extruder | Twinscrew extruder |
| | Spinning nozzle diameter | - | mm | Φ0.4 | Φ0.4 | Φ0.4 | Φ0.4 | Φ0.4 | Φ0.4 |
| | Tp | - | °C | 480 | 480 | 480 | 480 | 480 | 340 |
| | Ta | - | °C | 350 | 390 | 430 | 350 | 480 | 340 |
| | $\Delta T(Tp-Ta)$ | - | °C | 130 | 90 | 50 | 130 | 0 | 0 |
| | Tq | - | °C | - | - | - | - | 10 | 30 |
| | $\Delta T'(Tp-Tq)$ | - | °C | - | - | - | - | 470 | 310 |
| Measurement/ calculation results | Fiber viscosity | - | Pa•s | 91 | 93 | 91 | 206 | 94 | 98 |
| | Average fiber diameter | df | μm | 0.9 | 1.5 | 3.3 | 5.5 | 1.1 | 10.5 |
| | CV value | - | % | 69 | 81 | 95 | 66 | 65 | 95 |
| | Basis Weight | - | $g/m^2$ | 15 | 15 | 15 | 15 | 15 | 15 |
| | Thickness | h | mm | 0.44 | 0.42 | 0.41 | 0.49 | 0.47 | 0.38 |
| | Air permeability | - | $cm^3/cm^2/sec$ | 8 | 16 | 40 | 77 | 10 | 840 |

| | | Symbol | Unit | Example | | | | | |
|---|---|---|---|---|---|---|---|---|---|
| | | | | 1 | 2 | 3 | 4 | 5 | 6 |
| Physical properties at room temperature | | Collection efficiency (measured value) | Y | - | 0.640 | 0.610 | 0.580 | 0.470 | 0.690 | 0.115 |
| | | Collection efficiency (5 $\mu$m conversion value) | Y | - | 0.168 | 0.246 | 0.436 | 0.503 | 0.227 | 0.226 |
| | | Pressure loss (measured value) | $\Delta P_0$ | Pa | 87.1 | 46.8 | 19.7 | 10.6 | 73.1 | 1.1 |
| | | Pressure loss (5 $\mu$m conversion value) | $\Delta P_0$ | Pa | 2.82 | 4.22 | 8.58 | 12.82 | 3.54 | 4.87 |
| | | Q value (5 $\mu$m conversion value) | - | - | 0.065 | 0.067 | 0.067 | 0.054 | 0.073 | 0.053 |

EP 4 209 258 A1

18

(continued)

| | | | Symbol | Unit | Example | | | | | |
|---|---|---|---|---|---|---|---|---|---|---|
| | | | | | 1 | 2 | 3 | 4 | 5 | 6 |
| | Physical properties after heating | Collection efficiency (measured value) | Y | - | - | 0.602 | 0.573 | 0.545 | 0.442 | 0.649 | 0.099 |
| | | Collection efficiency (5 $\mu$m conversion value) | Y | - | - | 0.153 | 0.226 | 0.405 | 0.473 | 0.206 | 0.196 |
| | | Pressure loss (measured value) | $\Delta P_0$ | Pa | 83.2 | 44.7 | 18.8 | 10.1 | 69.8 | 1.1 |
| | | Pressure loss (5 $\mu$m conversion value) | $\Delta P_0$ | Pa | 2.70 | 4.03 | 8.19 | 12.24 | 3.38 | 4.90 |
| | | Q value (5 $\mu$m conversion value) | - | - | - | 0.061 | 0.063 | 0.064 | 0.052 | 0.068 | 0.045 |
| | Performance retention rate | | - | - | 94% | 95% | 95% | 96% | 94% | 85% |

[Table 2]

| | | Symbol | Unit | Comparative Example | | | | | |
|---|---|---|---|---|---|---|---|---|---|
| | | | | 1 | 2 | 3 | 4 | 5 | 6 |
| Manufacturing conditions | Resin type | - | | PEEK | PEEK | PEEK | PEEK | PP | PET |
| | Resin viscosity | - | Pa•s | 99 | 99 | 99 | 99 | 130 | 150 |
| | Extruder | - | - | single screw | Twin screw extruder | Twin screw extruder | Twin screw extruder | Twin screw extruder | Twin screw extruder |
| | Spinning nozzle diameter | - | mm | Φ0.4 | Φ0.4 | Φ0.4 | Φ0.4 | Φ0.4 | Φ0.4 |
| | $T_p$ | - | °C | 420 | 480 | 480 | 480 | 270 | 320 |
| | $T_a$ | - | °C | 420 | 480 | 450 | 230 | 270 | 320 |
| | $\Delta T(T_p-T_a)$ | - | °C | 0 | 0 | 30 | 250 | 0 | 0 |
| | $T_q$ | - | °C | - | - | - | - | - | - |
| | $\Delta T'(T_p-T_q)$ | - | °C | - | - | - | - | - | - |
| Measurement/ calculation results | Fiber viscosity | - | Pa•s | 97 | 91 | 92 | 95 | 120 | 111 |
| | Average fiber diameter | df | μm | 4.3 | 1.1 | 0.8 | 61 | 110 | 105 |
| | CV value | - | % | 132 | 255 | 182 | 155 | 15 | 15 |
| | Basis Weight | - | g/m$^2$ | 15 | 15 | 15 | 0.4 | 1 | 0.4 |

EP 4 209 258 A1

| | | Symbol | Unit | Comparative Example | | | | | | |
|---|---|---|---|---|---|---|---|---|---|---|
| | | | | 1 | 2 | 3 | 4 | 5 | 6 | |
| | Thickness | h | mm | 0.51 | 0.40 | 0.40 | 520 | 7.0 | 9.0 | |
| | Air permeability | - | cm3/cm2/sec | 58 | 13 | 10 | 0.1 | 1 | 1 | |
| Physical properties at room temperature | Collection efficiency (measured value) | Y | - | 0.280 | 0.330 | 0.340 | 0.110 | 0.650 | 0.610 | |
| | Collection efficiency (5 $\mu$m conversion value) | Y | - | 0.246 | 0.084 | 0.064 | 0.185 | 0.172 | 0.156 | |
| | Pressure loss (measured value) | $\Delta P_0$ | Pa | 13.9 | 57.0 | 73.1 | 1.7 | 102.4 | 80.7 | |
| | Pressure loss (5 $\mu$m conversion value) | $\Delta P_0$ | Pa | 10.24 | 2.76 | 1.87 | 5.39 | 2.62 | 2.62 | |
| | Q value (5 $\mu$m conversion value) | - | - | 0.028 | 0.032 | 0.036 | 0.038 | 0.064 | 0.065 | |
| Physical properties after heating | Collection efficiency (measured value) | Y | - | 0.263 | 0.310 | 0.320 | 0.103 | - | 0.210 | |
| | Collection efficiency (5 $\mu$m conversion value) | Y | - | 0.231 | 0.078 | 0.060 | 0.175 | - | 0.042 | |
| | Pressure loss (measured value) | $\Delta P_0$ | Pa | 13.2 | 54.4 | 69.8 | 1.7 | - | 87.1 | |
| | Pressure loss (5 $\mu$m conversion value) | $\Delta P_0$ | Pa | 9.78 | 2.63 | 1.79 | 5.14 | - | 2.82 | |
| | Q value (5 $\mu$m conversion value) | - | - | 0.027 | 0.031 | 0.034 | 0.037 | Resin dissolved | 0.015 | |
| | Performance retention rate | - | - | 97% | 97% | 97% | 98% | - | 23% | |

It was shown that the fiber nonwoven fabric obtained in each of Examples 1 to 6 had a lower CV value than the fiber nonwoven fabric obtained in each of Comparative Examples 1 to 4, and in each of Examples 1 to 6, the Q value of the unheated fiber nonwoven fabric and the Q value of the fiber nonwoven fabric after heat treatment were excellent.

In the fiber nonwoven fabric obtained in Comparative Example 5, the Q value of the fiber nonwoven fabric after heat treatment could not be measured because the resin molten during heating at 250°C.

It was shown that in the fiber nonwoven fabric obtained in Comparative Example 6, the Q value of the fiber nonwoven fabric after heat treatment was significantly lower than the Q value of the unheated fiber nonwoven fabric.

The disclosure of Japanese Patent Application 2020-170104, filed on October 7, 2020 is incorporated herein by reference in their entirety.

All publications, patent applications, and technical standards mentioned in the present specification are incorporated herein by reference to the same extent as if each individual publication, patent application, or technical standard was specifically and individually indicated to be incorporated by reference.

Explanation of Sign

10, 100 fiber nonwoven fabric manufacturing apparatus
20 extruder
21 hopper
22 compressor
30 die (spinneret)
31 spinning nozzle
32 gas nozzle
34 attachment
40 collection mechanism
41 porous belt
42 roller
43 air suction part
44 blower
50 gas heating device
P molten resin or resin composition
G heating gas

**Claims**

1. A fiber nonwoven fabric comprising:

   a fiber containing an aromatic polyether ketone,
   wherein a coefficient of variation in a fiber diameter of the fiber is 100% or less.

2. The fiber nonwoven fabric according to claim 1, wherein a viscosity of the fiber at 400°C is from 50 Pa•s to 500 Pa•s.

3. The fiber nonwoven fabric according to claim 1 or claim 2, wherein an average fiber diameter of the fiber is 10 $\mu$m or less.

4. The fiber nonwoven fabric according to any one of claims 1 to 3, wherein the aromatic polyether ketone includes a polyether ether ketone.

5. The fiber nonwoven fabric according to any one of claims 1 to 4, wherein the fiber nonwoven fabric includes a meltblown nonwoven fabric.

6. A filter comprising the fiber nonwoven fabric according to any one of claims 1 to 5.

7. A method of manufacturing a fiber nonwoven fabric comprising:

   a step of discharging a molten resin or a molten resin composition that contains an aromatic polyether ketone from a spinneret together with a heating gas, and drawing the resin or the resin composition with the heating gas to form a fibrous material, by a meltblown method,

wherein a flow rate of the heating gas is set to from 150 $Nm^3$/hour/m to 1000 $Nm^3$/hour/m,

wherein the heating gas is discharged so as to satisfy the following formulas (1) and (2) when a temperature of the heating gas is Ta (°C), a temperature of the molten resin or the molten resin composition is Tp (°C), a crystallization temperature of the aromatic polyether ketone is Tc (°C), and a melting point of the aromatic polyether ketone is Tm (°C):

$$\text{formula (1) } Tc < Ta \leq Tm + 200$$

$$\text{formula (2) } 40 \leq Tp - Ta \leq 190.$$

8. The method of manufacturing a fiber nonwoven fabric according to claim 7, wherein a viscosity of the resin or the resin composition at 400°C is from 50 Pa•s to 500 Pa•s.

9. The method of manufacturing a fiber nonwoven fabric according to claim 7 or claim 8, wherein the heating gas is discharged so as to satisfy the following formula (1)':

$$\text{formula (1)' } Tm - 30 \leq Ta \leq Tm + 200.$$

10. The method of manufacturing a fiber nonwoven fabric according to any one of claims 7 to 9, wherein the flow rate of the heating gas is set to from 250 $Nm^3$/hour/m to 850 $Nm^3$/hour/m.

11. A method of manufacturing a fiber nonwoven fabric comprising:
a step of discharging a molten resin or a molten resin composition that contains an aromatic polyether ketone from a spinneret together with a heating gas, and drawing the resin or the resin composition with the heating gas in addition to cooling the resin or the resin composition with a cooling gas supplied from both sides of a machine direction to form a fibrous material, by a meltblown method.

12. The method of manufacturing a fiber nonwoven fabric according to claim 11, wherein a flow rate of the cooling gas is set to from 1,000 $Nm^3$/hour/m to 20,000 $Nm^3$/hour/m.

13. The method of manufacturing a fiber nonwoven fabric according to claim 11 or claim 12, wherein a temperature of the cooling gas is 30°C or less.

14. The method of manufacturing a fiber nonwoven fabric according to any one of claims 11 to 13, wherein the heating gas is discharged, and the cooling gas is supplied so as to satisfy the following formula (3) when a temperature of the molten resin or the molten resin composition is Tp (°C), and a temperature of the cooling gas is Tq (°C):

$$\text{formula (3) } 350°C \leq Tp - Tq \leq 550°C.$$

15. The method of manufacturing a fiber nonwoven fabric according to any one of claims 7 to 14, wherein the aromatic polyether ketone includes a polyether ether ketone.

16. The method of manufacturing a fiber nonwoven fabric according to any one of claims 11 to 15, wherein the resin or the resin composition that contains the aromatic polyether ketone is molten using a twin screw extruder.

# FIG. 1

# FIG. 2

## INTERNATIONAL SEARCH REPORT

| | International application No. |
|---|---|
| | **PCT/JP2021/037058** |

**A. CLASSIFICATION OF SUBJECT MATTER**

*B01D 39/16*(2006.01)i; *D01F 6/76*(2006.01)i; *D04H 3/009*(2012.01)i; *D04H 3/16*(2006.01)i; *D01D 5/08*(2006.01)i
FI: D04H3/009; B01D39/16 A; D01D5/08 C; D01F6/76 Z; D04H3/16

According to International Patent Classification (IPC) or to both national classification and IPC

**B. FIELDS SEARCHED**

Minimum documentation searched (classification system followed by classification symbols)

D04H3/009; B01D39/16; D01D5/08; D01F6/76; D04H3/16

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP 2008-240225 A (TORAY INDUSTRIES) 09 October 2008 (2008-10-09) claims 1, 6, paragraphs [0001], [0021] | 1, 2, 4, 6 |
| A | entire text | 3, 5, 7-16 |
| A | JP 2010-106388 A (ASAHI KASEI FIBERS CORP) 13 May 2010 (2010-05-13) entire text | 1-16 |
| A | JP 2008-81893 A (TAPYRUS CO LTD) 10 April 2008 (2008-04-10) entire text | 1-16 |
| A | JP 2012-520950 A (ARKEMA INC) 10 September 2012 (2012-09-10) entire text | 1-16 |
| A | JP 2018-106827 A (DAICEL CORP) 05 July 2018 (2018-07-05) entire text, all drawings | 1-16 |

☐ Further documents are listed in the continuation of Box C.   ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **11 November 2021** | **22 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
**Information on patent family members**

International application No.

**PCT/JP2021/037058**

| Patent document cited in search report | | | Publication date (day/month/year) | Patent family member(s) | | | Publication date (day/month/year) |
|---|---|---|---|---|---|---|---|
| JP | 2008-240225 | A | 09 October 2008 | (Family: none) | | | |
| JP | 2010-106388 | A | 13 May 2010 | (Family: none) | | | |
| JP | 2008-81893 | A | 10 April 2008 | (Family: none) | | | |
| JP | 2012-520950 | A | 10 September 2012 | US | 2012/0015577 | A1 | |
| | | | | entire text | | | |
| | | | | WO | 2010/107976 | A1 | |
| | | | | EP | 2408830 | A1 | |
| | | | | CN | 102361898 | A | |
| JP | 2018-106827 | A | 05 July 2018 | (Family: none) | | | |

Form PCT/ISA/210 (patent family annex) (January 2015)

## REFERENCES CITED IN THE DESCRIPTION

**Patent documents cited in the description**

- JP 2008081893 A
- JP 2010106388 A
- WO 2012102398 A
- JP 9501604 A
- JP 2002115177 A
- JP 2020170104 A

**Non-patent literature cited in the description**

- **RUSSELL, STEPHEN J.** Handbook of nonwovens. Woodhead Publishing, 2006, 488